# EUROPEAN PATENT APPLICATION

(11) **EP 4 795 936 A1**
(43) Date of publication of application: **26.08.2026**
(21) Application number: 26159275.2
(22) Date of filing: 18.02.2026
(51) Int. Cl.: A21C 11/10, A21C 11/16, A21C 9/08

(54) **CUTTING APPARATUS FOR CUTTING EXTRUDED FOOD PRODUCTS IN THE FORM OF ELONGATED CORDS**

(30) Priority: 25.02.2025 IT 202500003765
(71) Applicant: Pavan S.p.A., 35015 Galliera Veneta (PD) (IT)
(72) Inventor: SCAPIN, Diego, 35010 San Giorgio in Bosco (Padova) (IT); CATTAI, Mattia, 31100 Treviso (IT); DI NUNNO, Davide, 31033 Castelfranco Veneto (Treviso) (IT); BASSO, Sergio, 31033 Castelfranco Veneto (Treviso) (IT)
(74) Representative: Dondi, Silvia

(57) **Abstract**

A cutting apparatus (1) for cutting extruded food products in the form of elongated cords (100), comprising:
a cutting station (10);
feeding means (20) for feeding the food products to the cutting station (10), said feeding means (20) being configured so that the food products advance in at least two distinct rows (101);
a guiding device (30) arranged upstream of the cutting station (10), said guiding device (30) comprising at least one guiding hole (31) for each row (101) of food product;
at least one cutting tool (11) arranged at the cutting station (10) and comprising one or more cutting blades (12) to perform the cut of the food products received from said feeding means (20);
said one or more cutting blades (12) being shaped and arranged so as to perform a cut simultaneously on both said at least two rows (101) of food product;
said at least one cutting tool (11) being arranged so that said one or more cutting blades (12) face a downstream end of the guiding holes (31).

## Description

The present invention relates to a cutting apparatus for cutting extruded food products in the form of elongated cords. The food products are especially pasta, snacks or pet food. The present invention finds best application in pasta or snack production lines.

As known, the extrusion process involves pushing a dough through a die. In known solutions, the extruded food product is cut at the outlet of the forming machine without first being subjected to treatments that change its characteristics.

One drawback of these solutions resides in that cutting blades must work in contact with the die of the forming machine, sometimes pressed against it. This causes rapid wear of the blades and consequent frequent substitution.

In addition, the product output of the forming machine is not structurally and dimensionally stable. The cutting performed consequently does not allow for high levels of quality in shape and/or consistent thickness of the cut product.

In this context, the technical task at the basis of the present invention is to propose a cutting apparatus for cutting extruded food products in the form of elongated cords, which overcome the problems of the prior art cited above.

In particular, the object of the present invention is to provide a cutting apparatus for cutting extruded food products in the form of elongated cords, which is able to process previously heat-treated product in order to achieve a high-quality cut in terms of regular shape and consistent thickness.

Another object of the present invention is to propose a cutting apparatus for cutting extruded food products in the form of elongated cords, which reduces downtime due to maintenance of the previous solutions.

The stated technical task and specified aims are substantially achieved by a cutting apparatus for cutting extruded food products in the form of elongated cords, comprising:
a cutting station;
feeding means for feeding the food products to the cutting station, said feeding means being configured so that the food products advance in at least two distinct rows spaced apart;
a guiding device arranged upstream of the cutting station and comprising at least one guiding hole for each row of food product;
at least one cutting tool arranged at the cutting station and comprising one or more cutting blades to perform the cut of the food products received from said feeding means;
said one or more cutting blades being shaped and arranged so as to perform a cut simultaneously on both said at least two rows of food product;
said at least one cutting tool being arranged so that said one or more cutting blades face a downstream end of the guiding holes.

According to one embodiment, the cutting tool is rotatable about a rotation axis, said feeding means being configured so that said at least two rows of food product at the cutting station are on opposite sides with respect to the rotation axis.

Preferably, the cutting tool comprises two arms developing away from the rotation axis according to two opposite directions, at least one of said one or more cutting blades being provided at the end of each arm.

According to one embodiment, the cutting apparatus comprises means for reversing the direction of rotation of the cutting tool about the rotation axis, said one or more cutting blades being shaped and arranged so as to be able to perform a cut on the food products in both directions of rotation, simultaneously on both rows of food product.

According to one embodiment, the guiding device comprises a main plate on which the guiding holes are obtained as through holes;
said cutting tool being arranged so that said one or more cutting blades face the main plate.

According to one embodiment, the feeding means comprise a roller pulling system for each row of food product, comprising:
- a motorized roller configured to pull the food product, and
- a pressure roller configured to apply a preset value of pressure on the food product.

Preferably, the roller pulling system comprises means for regulating the pressure applied by the pressure roller between at least a first value and a second value.

According to one embodiment, the cutting too is mounted on a fixed shaft and is connected to a drive unit, which puts the cutting tool in rotation about the rotation axis, by means of a gear coupling.

Preferably, the fixed shaft is mounted at one end on the main plate and develops away from it according to a direction substantially parallel to the rotation axis.

According to one embodiment, the cutting apparatus comprises a cutting casing at the cutting station which abuts a frame wall of the cutting apparatus to delimit the working area of the cutting tool, said drive unit being integral with the cutting casing, the cutting casing being hinged to the frame wall of the cutting apparatus so as to be movable between at least an open position, wherein the casing is distanced from the frame wall and the cutting tool is accessible from the outside, and a closed position, wherein the cutting casing is in contact with the frame wall and covers the cutting station.

According to one embodiment, the cutting apparatus comprises a receiving station of the food products cut, arranged downstream of the cutting station, said receiving station comprising a hopper having a first outlet communicating with conveying means of the food products cut and a second outlet being a discharge opening;
said hopper comprising a diverter movable to selectively enable the communication with one of the outlets.

The stated technical task and specified aims are substantially achieved by a pasta or snack or pet food production line, comprising:
at least one forming apparatus comprising at least one die for extruding a dough of food product in the form of elongated cords;
at least one cutting apparatus according to what is described, arranged downstream of said at least one forming apparatus for cutting the food product in the form of elongated cords.

Preferably, the production line comprises one or more heat treatment stations for the extruded food products, said stations being interposed between the forming apparatus and the cutting apparatus.

Further characteristics and advantages of the present invention will more fully emerge from the non-limiting description of a preferred but not exclusive embodiment of a cutting apparatus for cutting extruded food products in the form of elongated cords, as illustrated in the accompanying drawings, in which:

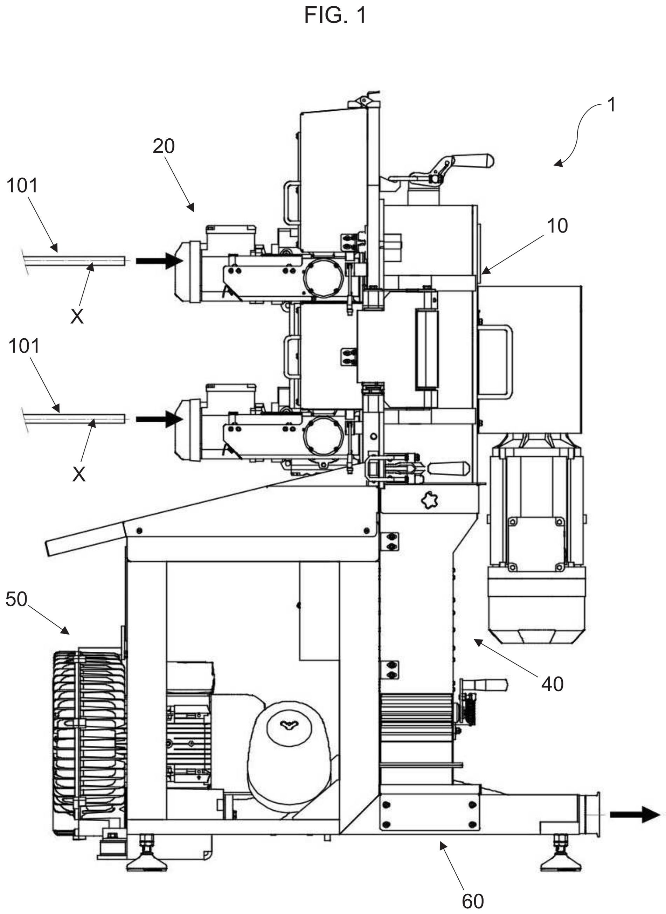

- figure 1 illustrates a lateral view of a cutting apparatus for cutting extruded food products in the form of elongated cords, according to the present invention;

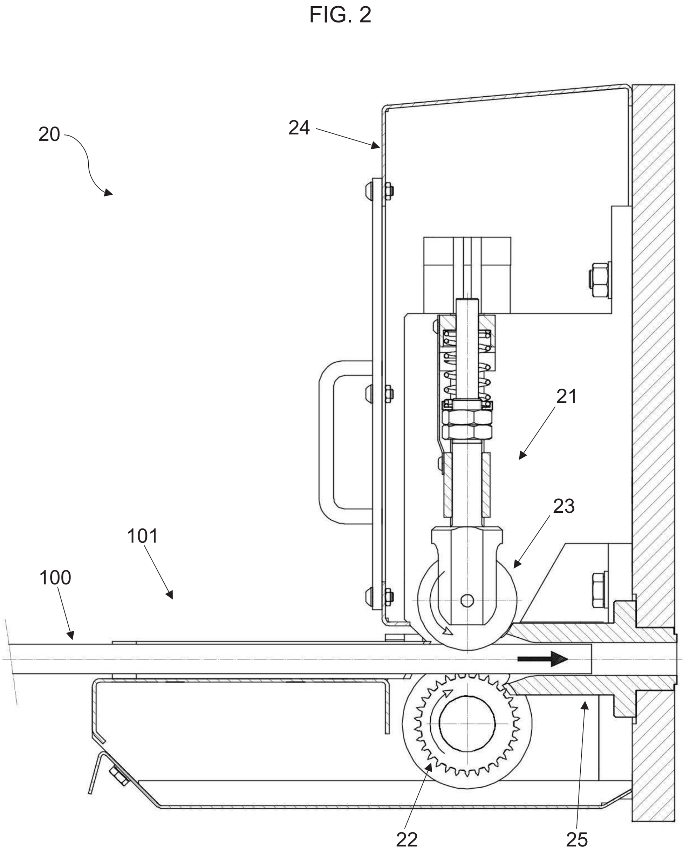

- figure 2 illustrates a part (feeding means) of the cutting apparatus of figure 1, in a sectional view;
- figures 3 and 4 illustrate respectively a first embodiment and a second embodiment of a part (cutting station) of the cutting apparatus of figure 1, in a sectional view;
- figures 5-7 illustrate a first embodiment of a part (main plate and cutting tool) of the cutting station of figure 3, respectively in a frontal view, in a perspective view and in an exploded view;
- figure 8 illustrates a second embodiment of a part (main plate and cutting tool) of the cutting station of figure 3, in a frontal view;
- figure 9 illustrates the cutting station of figure 3 in an open and partly disassembled condition;

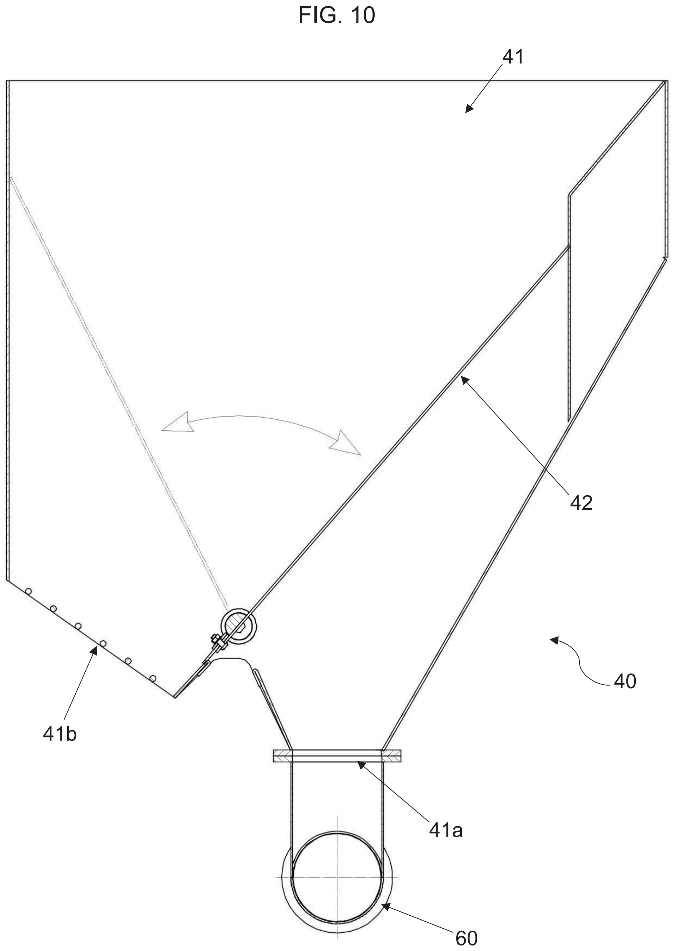

- figure 10 illustrates a part (receiving station) of the cutting apparatus of figure 1, in a sectional view.

With reference to the figures, number 1 denotes a cutting apparatus for cutting extruded food products - such as pasta, snacks or pet food - in the form of elongated cords 100. In particular, the elongated cords 100 have prevailing development along a longitudinal direction "X". Advantageously, the extruded food products are thermically pre-treated before entering the cutting apparatus 1.

The cutting apparatus 1 comprises a cutting station 10.

The cutting apparatus 1 comprises feeding means 20 for feeding the food products to the cutting station 10. The feeding means 20 are configured so that the food products advance in at least two distinct rows 101 spaced apart. In other words, the cutting station 10 receives the food products simultaneously in at least two distinct rows 101.

In particular, the feeding means 20 are configured so that the food products advance along a direction which is substantially parallel to their longitudinal direction "X".

The cutting apparatus 1 comprises at least one cutting tool 11 arranged at the cutting station 10. The cutting tool 11 comprises one or more cutting blades 12 to perform the cut of the food products received from the feeding means 20.

For "cutting blade" here is intended the cutting edge of the tool, as per definition.

The cutting blades 12 are shaped and arranged so that the cutting tool 11 performs a cut simultaneously on the two distinct rows 101 of food product.

In this way, the cut performed is balanced and reduces the vibrations generated.

Preferably, the cutting tool 11 comprises at least two distinct cutting blades 12 arranged so that they perform the cut simultaneously, each cutting blade 12 on one of the two distinct rows 101.

According to the illustrated embodiment, the two distinct rows 101 are arranged opposite from one another with respect to a central point of reference.

In other words, the two distinct rows 101 are arranged on two opposite sides with respect to a point of reference.

In this way, the forces generated on the cutting tool 11 during the simultaneous cut balance themselves.

The cutting apparatus 1 comprises a guiding device 30 arranged upstream of the cutting station 10. As will become clear from the below description, the guiding device 30 serves to guide the food product into the cutting station 10 in a proper position for it to be cut. In other words, the guiding device 30 appropriately supports the food product during cut.

The guiding device 30 comprises at least one guiding hole 31 for each row of food product. In particular, the food products are fed to the cutting station 10 through the guiding hole 31 of the guiding device 30.

In particular, the cutting station 10 is downstream of the guiding holes 31. Preferably, the guiding device 30 (in particular, the guiding hole 31) defines a inlet to the cutting station 10.

The cutting tool 11 is arranged at the cutting station 10 so that the one or more cutting blades 12 face a downstream end of the guiding holes 31. In this way, the food product is supported by the guiding holes 31 and the conditions necessary for optimal cutting are created.

In particular, the cutting blade 12 is approached, but not in contact with the guiding hole 31.

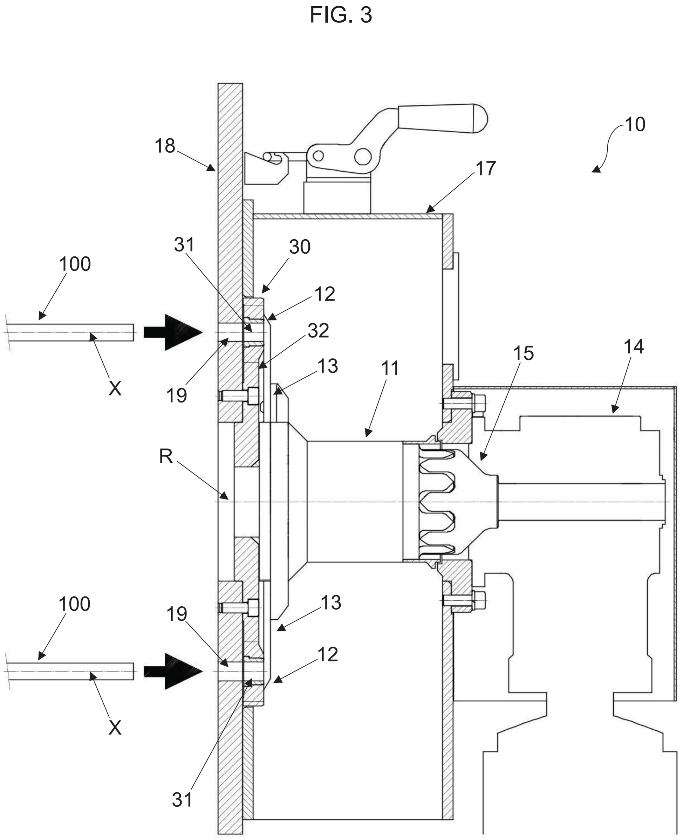

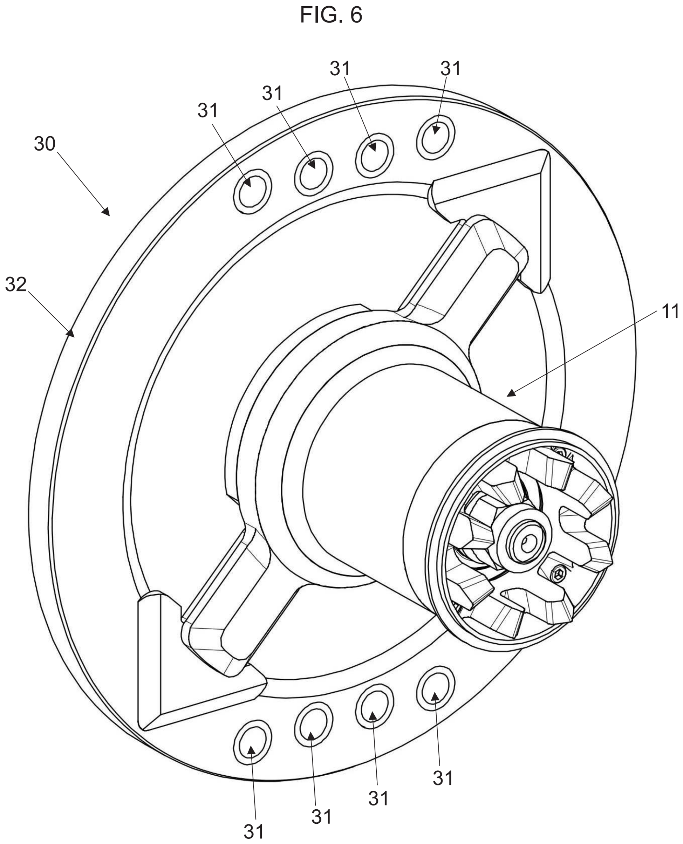

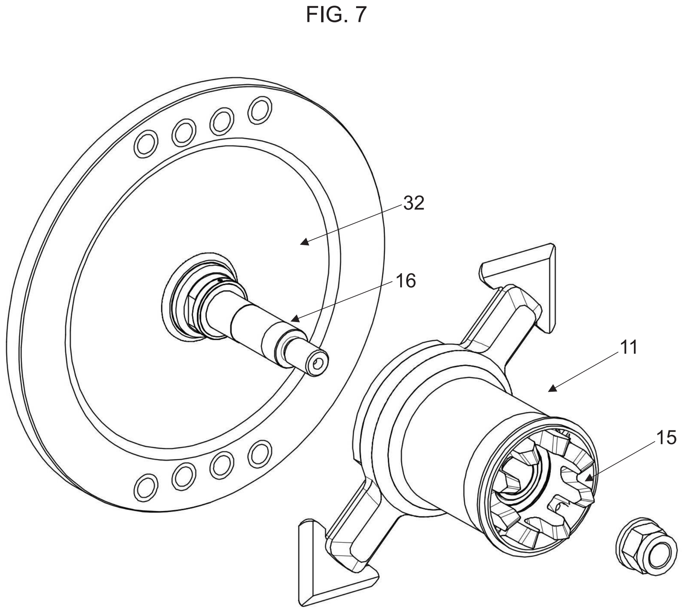

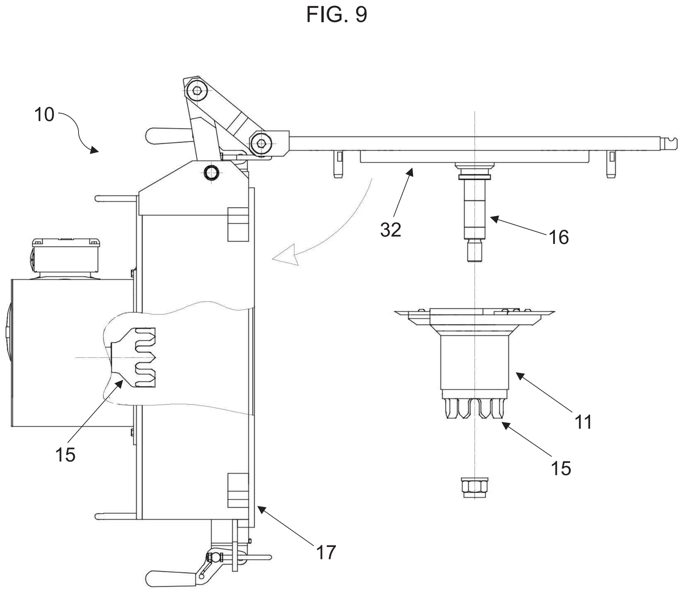

According to the preferred embodiment, illustrated in figures 3 and 5-9, the guiding device 30 comprises a main plate 32 on which the guiding holes 31 are obtained as through holes.

The cutting tool 11 is arranged so that the one or more cutting blades 12 face the main plate 32. The food products are cut as soon as they exit the guiding holes 31.

In particular, the cutting blade 12 is approached, but not in contact with the main plate 32.

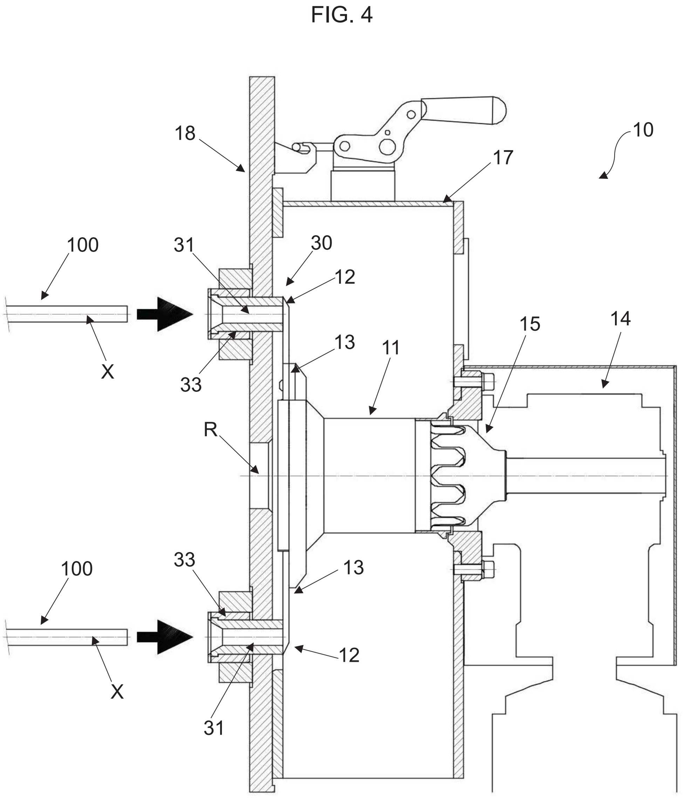

According to one alternative embodiment, illustrated in figure 4, the guiding device 30 comprises one sleeve 33 for row. Each sleeve 33 has one guiding hole 31 (as through hole) for guiding the food product to the cutting tool 11.

In particular, the sleeve 33 is inserted in a wall frame delimiting the cutting station 10.

According to the illustrated embodiment, the at least two rows 101 of food products are fed on two different height levels, a superior one and an inferior one.

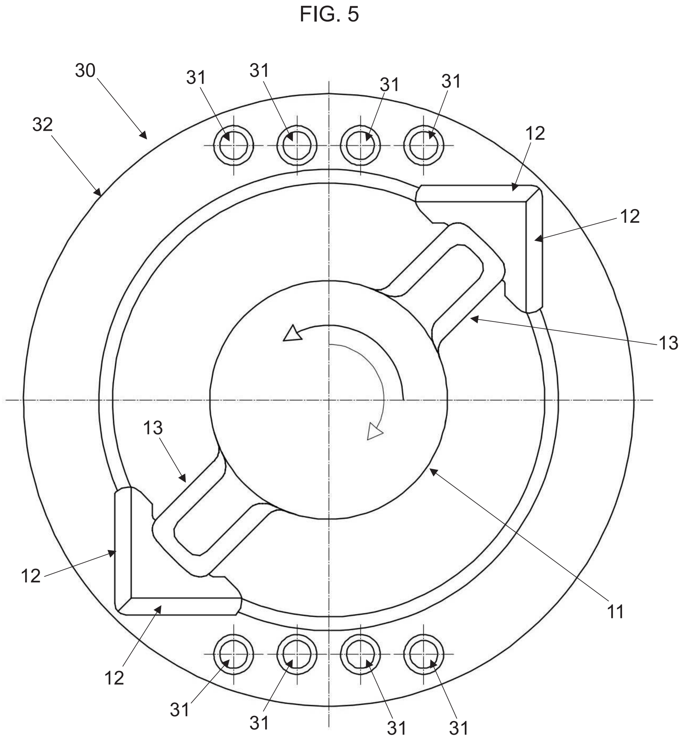

Preferably, for each level there are multiple rows 101 of food products. In the exemplary embodiment illustrated in figures 5-8, the rows are four for each level.

Preferably, the rows of food products of the same level are substantially flanked and parallel one to another.

According to one embodiment, the feeding means 20 comprises a roller pulling system 21 for each row of food product.

The roller pulling system 21 comprises a motorized roller 22 configured to pull the food product.

The roller pulling system 21 comprises a pressure roller 23 configured to apply a preset value of pressure on the food product.

In particular, the motorized roller 22 and the pressure roller 23 are arranged at opposite sides of the extruded cord 100. Preferably, the motorized roller 22 is placed below the extruded cord 100 and the pressure roller 23 above.

According to one embodiment, the roller pulling system 21 comprises means for regulating the pressure applied by the pressure roller 23 between at least a first value and a second value, greater than the first one.

The first value serves to facilitate the introduction of the cords into the apparatus.

The second value corresponds to a standard working situation. The greater pressure provides stability during cut and better pulling.

Preferably, the means for regulating the pressure comprise a pneumatic cylinder and a compression spring.

The pressure of each roller on the product can be set by acting on the respective compression spring. The pressure rollers are moved by pneumatic cylinders.

According to one embodiment, the motorized roller 22 is unique for all the rows 101 of food products of the same level. Instead, each row has its dedicated pressure roller 23.

According to one embodiment, the roller pulling system 21 is housed in a dedicated pulling casing 24.

The pulling casing 24 abuts a frame wall of the cutting apparatus 1 to define a delimited inlet section for the food products.

The feeding means 20 comprises a guide bushing 25 for the food product, downstream of the roller pulling system 21.

Preferably, the guide bushing 25 is fitted into the frame wall on which the pulling casing 24 abuts.

In particular, the frame wall divides the inlet section from the cutting station 10. In particular, the food product passes through the frame wall via a dedicated through hole and arrives at the cutting station 10.

This leads to a compact inlet section which is upstream of the cutting station 10.

According to the preferred embodiment, the cutting tool 11 is rotatable about a rotation axis "R". The feeding means 20 are configured so that at the cutting station 10 the two rows 101 of food product are fed on opposite sides with respect to the rotation axis "R".

Preferably, the cutting tool 11 comprises two arms 13 developing away from the rotation axis "R" according to two opposite directions. At least one cutting blade 12 is provided at the end of each arm 13.

According to a first embodiment of the cutting blade, illustrated in figures 5-7, the cutting blade 12 has linear shape.

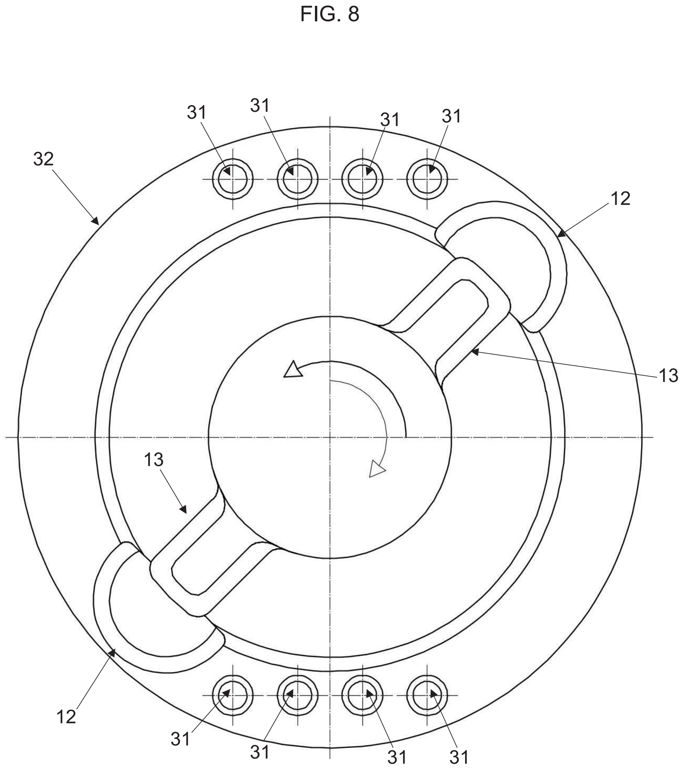

According to a second embodiment of the cutting blade, illustrated in figure 8, the cutting blade 12 has curvilinear shape.

According to one embodiment, the cutting apparatus 1 comprises means for reversing the direction of rotation of the cutting tool 11 about the rotation axis "R". Appropriately, the cutting blades 12 are shaped and arranged so as to be able to perform a cut on the food products in both directions of rotation, simultaneously on both rows 101 of food product.

In the first embodiment of the cutting blade, the cutting blade 12 has two convergent linear portions. In other words, they are two sides of a triangular shape.

The arm 13 and the cutting blades 12 have the shape of an arrow (linear body with a triangular tip).

In the second embodiment of the cutting blade, the cutting blade 12 has semicircular shape.

The preceding embodiments are only exemplary illustrations of how the cutting blade can be made to satisfy the requirement of performing the cut on both directions of rotation.

The key feature is having at least two portions of cutting blade (either two parts of the same cutting blade or two distinct cutting blades) able to cut the food products, mutually arranged so that only one of them performs the cut per direction of rotation.

In other words, one portion at a time performs the cut while the other one rests.

In the embodiment with two opposite arms 13, each arm 13 has at least two portions of cutting blade following the above logic.

Preferably, the cutting blades 12 are removably mounted with respect to the cutting tool 11. This allows the substitution of the sole cutting blades 12 instead of all the cutting tool 11.

According to one embodiment, the cutting blades 12 are removably mounted on the arm 13.

According to one embodiment, the cutting tool 11 is connected to a drive unit 14 by means of a gear coupling 15.

Preferably, the cutting tool 11 is mounted on a fixed shaft 16 and it is able to rotate about the rotation axis "R". The drive unit 14 puts the cutting tool 11 in rotation via the gear coupling 15.

Preferably, one portion of the gear coupling 15 is integral with the cutting tool 11 and the other one is integral with the drive unit 14.

Preferably, the fixed shaft 16 is mounted at one end on the main plate 32 and develops away from it according to a direction substantially parallel to the rotation axis "R" (preferably, substantially coincident).

According to one embodiment, the cutting apparatus 1 comprises a frame wall 18 delimiting one side of the cutting station 10. The frame wall 18 has passages 19 for the rows 101.

The feeding means 20 are configured so that the rows 101 passes through the passages 19.

According to one embodiment, the passages 19 are arranged upstream of the guiding holes 31. Preferably, the passages 19 and the guiding holes 31 are directly communicating.

Preferably, the passages 19 and the guiding holes 31 are in series. The feeding means 20 are configured so that the rows 101 passes through the passages 19 and the guiding holes 31.

This is the case of the embodiment with the main plate 32, wherein the main plate 32 is attached to a side of the frame wall 18 so that the passages 19 and the guiding holes 31 are in series.

In particular, the guide device 30 is interposed between the frame wall 18 and the cutting tool 11.

According to the embodiment with the sleeve 33, the sleeve 33 is at least partly fitted in the frame wall 18.

Preferably, the sleeve 33 is shaped so that the guiding hole 31 extends through the frame wall 18 and the sleeve 33 protrudes from the frame wall 18 at least at the cutting station 10 side.

In this case, the passage 19 is the housing in which the sleeve 33 is accommodated. The rows 101 pass through the passage 19 via the sleeve 33 (and the guiding hole 31).

According to one embodiment, the cutting apparatus 1 comprises a cutting casing 17 at the cutting station 10 which abuts a frame wall 18 of the cutting apparatus 1 to delimit the working area of the cutting tool 11.

The drive unit 14 is integral with the cutting casing 17.

The cutting casing 17 is hinged to the frame wall 18 of the cutting apparatus 1 so that it is movable between at least an open position, wherein the casing 17 is distanced from the frame wall and leaves the cutting tool 11 accessible for operations, such as disassembly for substitution of cutting blades, and a closed position, wherein the cutting casing 17 is in contact with the frame wall and makes the cutting station 10 not accessible from the exterior.

According to one embodiment, the cutting apparatus 1 comprises a receiving station 40 for the food products cut. The receiving station 40 is arranged downstream of the cutting station 10.

Preferably, the receiving station 40 is arranged below the cutting station 10 so that the food products cut fall down to the receiving station 40 for gravity.

The receiving station 40 comprises a hopper 41 having a first outlet 41a communicating with conveying means of the food products cut and a second outlet 41b being a discharge opening.

The conveying means convey the food products cut towards downstream apparatuses.

The discharge opening can be used for example as a sampling port or a discharge of non-compliant food product.

The hopper 41 comprises a diverter 42 movable to selectively put the inlet in communication with one of the outlets 41a, 41b.

According to the preferred embodiment, the first outlet 41a is in communication with an injector for pneumatic conveying.

Preferably, the cutting apparatus 1 comprises a blower unit 50 integrated in the frame and connected to the injector 60 for pneumatic conveying.

A pasta or snacks or pet food production line is also object of the present invention.

The production line comprises at least one forming apparatus comprising at least one die for extruding a dough of food products in the form of elongated cords.

The production line comprises at least one cutting apparatus 1 according to what described before.

The production line comprises one or more heat treatment stations for the extruded food products. These stations are interposed between the forming apparatus and the cutting apparatus 1.

The characteristics and the advantages of the cutting apparatus for cutting extruded food products in the form of elongated cords, according to the present invention, are clear, as are the advantages.

In particular, the cutting apparatus proposed is able to process previously heat-treated product in order to achieve a high-quality cut in terms of regular shape and consistent thickness.

Moreover, the balanced cut together with the arrangement of the cutting tool and cutting blades with respect to the guiding device reduces the wear of the cutting blades, avoiding frequent downtime due to maintenance. This is further improved by the movable cutting casing which allows for a quick and easy change of the cutting blades.

## Claims

1. A cutting apparatus (1) for cutting extruded food products in the form of elongated cords (100), comprising:
a cutting station (10);
feeding means (20) for feeding the food products to the cutting station (10), said feeding means (20) being configured so that the food products advance in at least two distinct rows (101) spaced apart;
a guiding device (30) arranged upstream of the cutting station (10) and
comprising at least one guiding hole (31) for each row (101) of food product;
at least one cutting tool (11) arranged at the cutting station (10) and
comprising one or more cutting blades (12) to perform the cut of the food products received from said feeding means (20);
said one or more cutting blades (12) being shaped and arranged so as to perform a cut simultaneously on both said at least two rows (101) of food product;
said at least one cutting tool (11) being arranged so that said one or more cutting blades (12) face a downstream end of the guiding holes (31).

2. The cutting apparatus (1) according to claim 1, wherein the cutting tool (11) is rotatable about a rotation axis (R), said feeding means (20) being configured so that said at least two rows of food product at the cutting station (10) are on opposite sides with respect to the rotation axis (R).

3. The cutting apparatus (1) according to claim 2, wherein the cutting tool (11) comprises two arms (13) developing away from the rotation axis (R) according to two opposite directions, at least one of said one or more cutting blades (12) being provided at the end of each arm (13).

4. The cutting apparatus (1) according to claim 2 or 3, comprising means for reversing the direction of rotation of the cutting tool (11) about the rotation axis (R), said one or more cutting blades (12) being shaped and arranged so as to be able to perform a cut on the food products in both directions of rotation, simultaneously on both rows of food product.

5. The cutting apparatus (1) according to any one of the preceding claims, wherein the guiding device (30) comprises a main plate (32) on which the guiding holes (31) are obtained as through holes;
said cutting tool (11) being arranged so that said one or more cutting blades (12) face the main plate (32).

6. The cutting apparatus (1) according to any one of the preceding claims, wherein the feeding means (20) comprises a roller pulling system (21) for each row of food product, comprising:
- a motorized roller (22) configured to pull the food product, and
- a pressure roller (23) configured to apply a preset value of pressure on the food product.

7. The cutting apparatus (1) according to claim 6, wherein the roller pulling system (21) comprises means for regulating the pressure applied by the pressure roller between at least a first value and a second value.

8. The cutting apparatus (1) according to any one of claims 2 to 7, wherein the cutting tool (11) is mounted on a fixed shaft (16) and is connected to a drive unit (14), which puts the cutting tool (11) in rotation about the rotation axis (R), by means of a gear coupling (15).

9. The cutting apparatus (1) according to claim 8 when it depends on claim 5, wherein the fixed shaft (16) is mounted at one end on the main plate (32) and develops away from it according to a direction substantially parallel to the rotation axis (R).

10. The cutting apparatus (1) according to claim 9, comprising a cutting casing (17) at the cutting station (10) which abuts a frame wall (18) of the cutting apparatus (1) to delimit the working area of the cutting tool (11), said drive unit (14) being integral with the cutting casing (17), the cutting casing (17) being hinged to the frame wall (18) of the cutting apparatus (1) so as to be movable between at least an open position, wherein the casing (17) is distanced from the frame wall and the cutting tool (11) is accessible from the outside, and a closed position, wherein the cutting casing (17) is in contact with the frame wall and covers the cutting station (10).

11. The cutting apparatus (1) according to any one of the preceding claims, comprising a receiving station (40) of the food products cut, arranged downstream of the cutting station (10); said receiving station (40) comprising a hopper (41) having a first outlet (41a) communicating with conveying means of the food products cut and a second outlet (41b) being a discharge opening;
said hopper (41) comprising a diverter (42) movable to selectively enable the communication with one of the outlets (41a, 41b).

12. A pasta or snack or pet food production line, comprising:
at least one forming apparatus comprising at least one die for extruding a dough of food product in the form of elongated cords;
at least one cutting apparatus (1) according to any one of the preceding claims, arranged downstream of said at least one forming apparatus for cutting the food product in the form of elongated cords.

13. The pasta or snack or pet food production line, comprising one or more heat treatment stations for the extruded food products, said stations being interposed between the forming apparatus and the cutting apparatus (1).
